# EUROPEAN PATENT APPLICATION

(11) **EP 4 219 427 A1**
(43) Date of publication of application: **02.08.2023**
(21) Application number: 23154291.1
(22) Date of filing: 31.01.2023
(51) Int. Cl.: C04B 35/563, C04B 35/58, C04B 35/626

(54) **PROCESS FOR PRODUCING CERAMIC COMPOSITE MATERIALS FOR BALLISTIC PURPOSES BASED ON B4C, TIB2 AND B4C/TIB2**

(30) Priority: 01.02.2022 IT 202200001658
(71) Applicant: Consiglio Nazionale Delle Ricerche - CNR, 00185 Roma (IT)
(72) Inventor: SCITI, Diletta, FAENZA (IT); FAILLA, Simone, FAENZA (IT)
(74) Representative: Biggi, Cristina

(57) **Abstract**

The present invention relates to a process for producing a ceramic composite material, preferably for ballistic purposes, comprising B₄C, TiB₂, or B₄C/xTiB₂, wherein 0% vol. < x ≤ 95% vol., sinterable at a temperature ≤ 2100°C, preferably < 2100 °C, by sintering without applied mechanical pressure (PLS), with or without inert gas pressure.

The present invention also relates to a ceramic composite article obtainable with said process, comprising B₄C, TiB₂, or B₄C/xTiB₂ wherein 0% vol. < x ≤ 24% vol., and the use thereof preferably for applications in the ballistic field.

## Description

### FIELD OF THE INVENTION

The present invention relates to a process for producing a ceramic composite material, preferably for ballistic purposes, comprising B₄C and/or based on TiB₂, sinterable at temperatures ≤ 2100°C by sintering without applied mechanical pressure, with or without inert gas pressure.

### STATE OF THE ART

Among ceramic materials, boron carbide (B₄C) is one of the lightest (ρ= 2.52 g/cm³) and hardest (35 GPa) materials, second only to diamond and boron nitride (BN). Thanks to these properties, B₄C is used in various industrial sectors, for example to produce scratch-resistant coatings, cutting tools, abrasive tools or ballistic protection. Despite this, the full potential use of this material is limited because of its extreme fragility and the difficulty in sintering, especially at the industrial level, since it requires temperatures above 2200 °C.

The techniques presently used to make articles based on B₄C or other borides or carbides of transition metals (TiB₂, ZrB₂, HfB₂, HfC, WC, TiC etc.) are based on discontinuous sintering techniques that require high temperatures and high mechanical pressures applied with vacuum chambers or under an inert gas flow to prevent oxidation of the materials to be sintered and of the internal parts of the furnaces, which are generally made of graphite. One example of a commonly used discontinuous sintering technique is hot pressing (HP), which is used to unidirectionally press the powder of ceramic materials to be sintered inside a mould, generally made of graphite, using a mechanical pressure of about 20-50 MPa.

A typical example of production of a B₄C/TiB₂-based material by hot pressing (HP) at temperatures between 1750 and 1930 °C, with an applied pressure of 30 MPa and short dwell times (10-20 minutes), is described by S. Failla et al., "Hard and easy sinterable B4C-TiB2-based composites doped with WC", J. Eur. Ceram. Soc. 38 (2018) 3089-3095. Other techniques known in the art based on the application of mechanical pressure are "Spark Plasma Sintering" and so-called hot isostatic pressing (HIP). The latter is usually carried out after the encapsulation of specimens that are pre-sintered inside containers and heated at high temperatures together with the use of an inert gas that isostatically presses the specimens at pressures of up to 300 MPa.

However, such techniques pose drawbacks on an industrial scale, since, as already mentioned, they are discontinuous processes which can only produce single articles at a time and they are moreover limited by the fact of obtaining simple quadrangular or cylindrical geometries which require costly grinding and/or machining after sintering in order to obtain the final shapes desired. In the case of B₄C-, TiB₂- or B₄C/TiB₂-based materials, these post-sintering operations, due to the extremely hard nature of such materials, require the use of diamond-coated grinding wheels or electrical discharge machining techniques.

It thus appears clear that such techniques are neither industrially scalable nor economically sustainable. Furthermore, as already mentioned, given the pressing conditions and limited availability of moulds with different geometric shapes that can withstand such pressures, it is difficult if not impossible to obtain ceramic articles having variable shapes and sizes.

Among the possible alternative techniques, pressureless sintering (PLS) is often desired because of the economic advantages associated with production and its simplicity of application. However, this technique is not particularly advantageous for sintering B₄C-, TiB₂- or B₄C/TiB₂-based materials.

TiB₂ is a hard, resistant ceramic, particularly suitable for high-temperature structural applications. It possesses high values of hardness (25-30 GPa) and mechanical strength (800-1000 MPa) and is the lightest of the borides belonging to this category of materials (density 4.52 g/cm³). This makes it interesting as a structural material for aerospace or military applications or as cutting tools. Besides possessing a very high melting point (-3225 °C), TiB₂ is an excellent electrical conductor with resistivity in the order of 10-20 µΩ cm. However, even in this advantageous combination, B₄C/TiB₂ composites remain difficult to sinter.

In fact, the densification of these materials in the absence of mechanical pressure requires high temperatures, between 2100 and 2500 °C, and long firing times (about 1-5 hours in an inert atmosphere), as described, for example, in patent application US2011160035, and/or post-sintering treatments using the HIP technique as described in patent application US2011/0227259, wherein this technique is employed at a temperature of 2150 °C for a dwell time of 3 hours. Under these conditions, there is growth of the grains and the materials thus obtained, though dense, possess mechanical strengths that are up to 20% lower compared to the same materials sintered with the aid of mechanical pressure. Furthermore, sintering additives, such as, for example, carbon, pure metals, oxide and non-oxide ceramics are required in order to promote the densification of this type of ceramic materials. It has in fact been observed that such additives provide improvements in densification by decreasing the sintering temperature thanks to the formation of liquid phases. Although carbon and metal phases are effective as additives, the residues on the grain can significantly decrease the hardness and deteriorate the mechanical properties of hard ceramics.

The gas pressure sintering (GPS) technique, usually with a pressure below 10 MPa, is also known in the art as a variation of the HIP technique and is similar to the PLS technique. The GPS technique makes it possible to sinter materials with a high vapour pressure which tend to degrade at high temperatures, such as, for example, Si₃N₄ or ceramic and metal materials known as "cermets". However, at the present state of the art, there are no significant works on the use of this technique for mass production of advanced B₄C-, TiB₂- or B₄C/TiB₂-based ceramic composite materials for the ceramics industry.

In the light of the above, it appears clear that there remains a need in this sector to provide a process for producing B₄C-based and/or TiB2-based ceramic materials by means of a single sintering cycle in the absence of mechanical pressure, with or without gas pressure, at temperatures ≤ 2100 °C, preferably at temperatures < 2100 °C, in shorter times, and which can be applied on an industrial scale while maintaining sustainable production costs and in any case allowing the obtainment of materials with different shapes and geometries, a relative density greater than 98% and the desired mechanical properties, including a high degree of hardness and toughness, and which can have better performances than the present commercial materials produced on a large scale.

### SUMMARY OF THE INVENTION

The present invention relates to a process for producing a ceramic composite material, preferably for ballistic purposes, comprising B₄C, TiB₂, or B₄C/xTiB₂, wherein 0% vol. < x ≤ 95% vol., sinterable at temperatures ≤ 2100°C, preferably < 2100 °C, by sintering without applied mechanical pressure (PLS), with or without inert gas pressure.

More specifically, the process according to the present invention comprises, prior to sintering in the absence of mechanical pressure, a step of subjecting a powder comprising B₄C, or a powder comprising TiB₂, or a powder comprising B₄C/xTiB₂, wherein 0% vol. < x ≤ 95% vol., to high energy milling (HEM) in an organic solvent and/or water, within a tungsten carbide (WC) jar or a WC-coated jar and in the presence of cemented WC grinding media.

The powder thus milled is subsequently dried, compacted and subjected to cold isostatic pressing (CIP) to obtain a semi-finished product having a relative density between 60 and 65% and which is subsequently subjected to a single sintering cycle in the absence of mechanical pressure by heating it in a vacuum at 20-80 Pa to a temperature between 1600 and 1800 °C.

According to one embodiment, heating of said semi-finished product is continued up to a maximum temperature (T) of 1900 °C ≤ T ≤ 2100 °C, applying an inert gas pressure according to the PLS-GPS sintering technique (i.e. sintering in the absence of mechanical pressure with inert gas pressure).

The present invention also relates to a ceramic composite article comprising B₄C, TiB₂, or B₄C/xTiB₂, wherein 0% vol. < x ≤ 24% vol., obtainable according to the process described, and the use of said ceramic composite article for making ballistic protection, cutting tools or blasting nozzles and for nuclear applications.

### BRIEF DESCRIPTION OF THE FIGURES

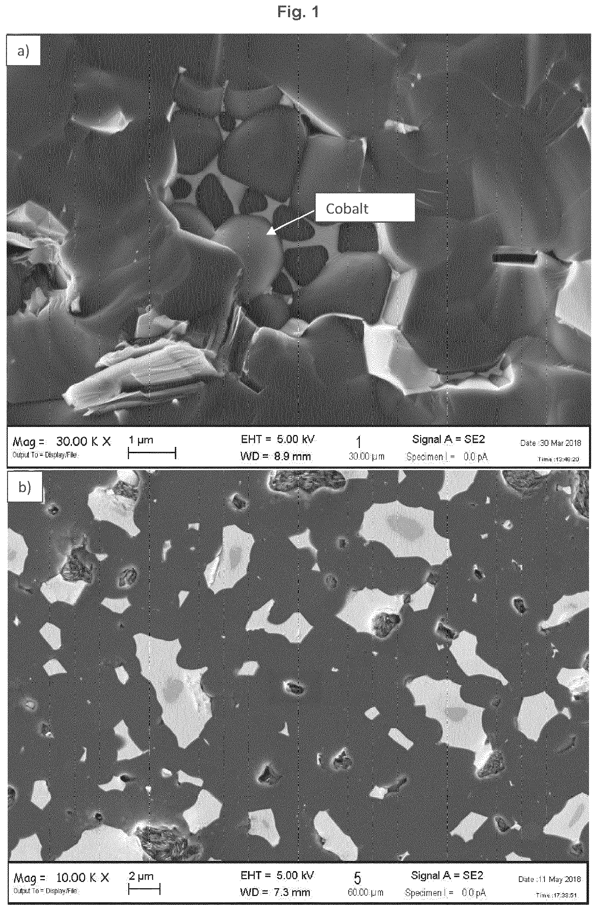

Figure 1 shows SEM images of the microstructure of the fracture (a) and of the polished cross section (b) of the B₄C/TiB₂ 87.5/12.5 ceramic composite material obtained by means of the PLS-GPS technique as described in Example 2. Black phase: B₄C; dark grey phase: TiB₂; light grey phase: solid solution (Ti, W)B₂; cobalt: indicated in the Figure.

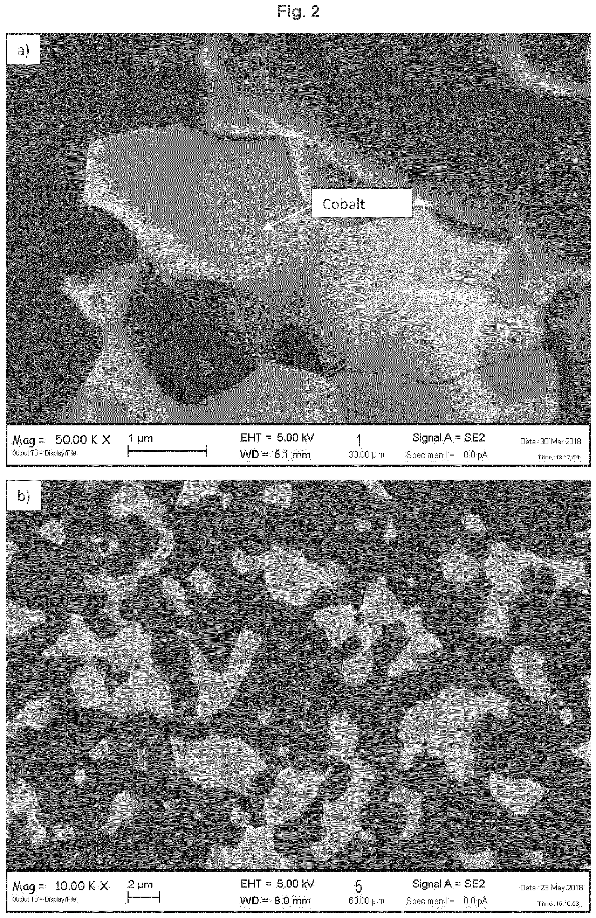

Figure 2 shows SEM images of the microstructure of the fracture (a) and of the polished cross section (b) of the B₄C/TiB₂ 75/25 ceramic composite material obtained by means of the PLS-GPS technique as described in Example 2. Black phase: B₄C; dark grey phase: TiB₂; light grey phase: solid solution (Ti, W)B₂; cobalt: indicated in the Figure.

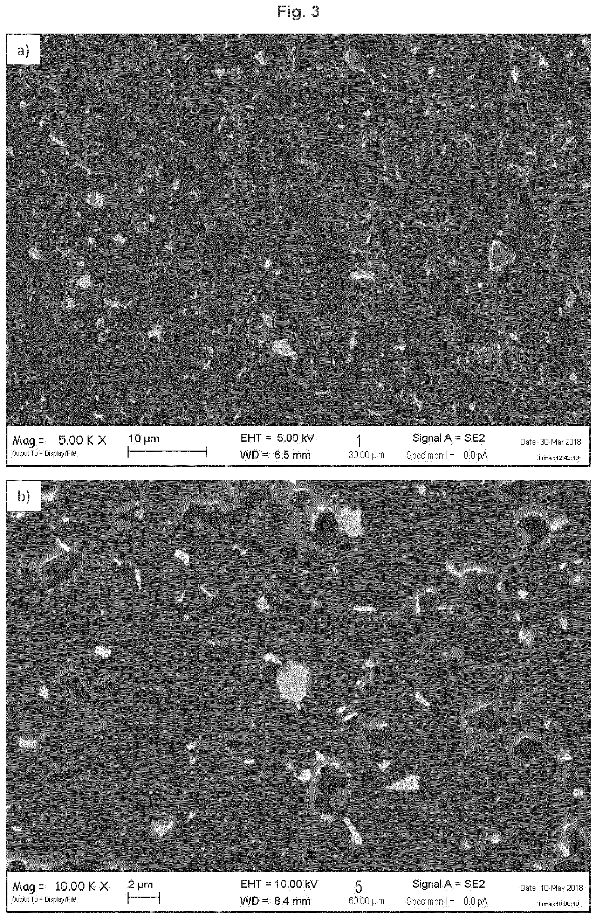

Figure 3 shows SEM images of the microstructure of the fracture (a) and of the polished cross section (b) of the B₄C-based ceramic composite material obtained by means of the PLS-GPS technique as described in Example 2. Black phase: B₄C; grey phase: WxBy.

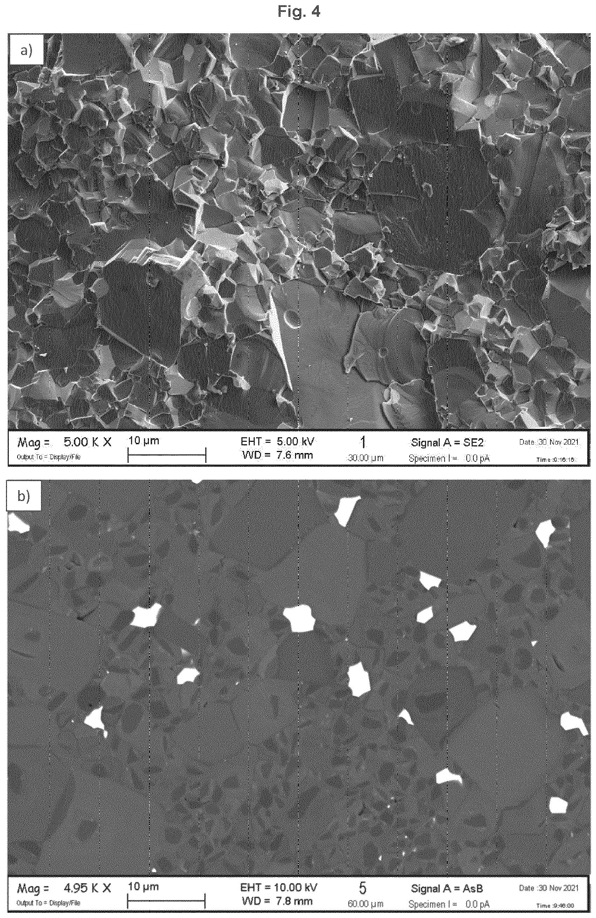

Figure 4 shows SEM images of the microstructure of the fracture (a) and of the polished cross section (b) of the TiB₂-based ceramic composite material obtained by means of the PLS-GPS technique as described in Example 2. Dark grey phase: TiB₂; light grey phase: solid solution (Ti, W)B₂; white phase: WxBy.

### DETAILED DESCRIPTION OF THE INVENTION

For the purposes of the present invention, the expression "ceramic composite materials comprising B₄C and from > 0% vol. to ≤ 95% vol. of TiB₂" and the expression "ceramic composite materials comprising B₄C/xTiB₂ wherein 0% vol. < x ≤ 95% vol." are to be understood as interchangeable synonyms.

In other words, such expressions are to be understood as referring to ceramic materials comprising B₄C wherein TiB₂ = 0% vol., ceramic materials comprising TiB₂ wherein B₄C = 0% vol., or ceramic composite materials comprising both B₄C and TiB₂, the latter being present in an amount between > 0% vol. and ≤ 95% vol. (in other words, materials comprising B₄C/xTiB₂ wherein 0% vol. < x ≤ 95% vol.).

For the purposes of the present invention, the ceramic composite materials according to any one of the embodiments described comprise WxBy phases and possibly (Ti, W)B₂ solid phases deriving from doping with tungsten carbide (WC); in other words, they are ceramic composite materials comprising B₄C, TiB₂ or B₄C/xTiB₂, wherein 0% vol. < x ≤ 95% vol., doped.

According to a preferred embodiment, the ceramic composite materials of the present invention as described below are "B₄C-based, TiB₂-based, or B₄C- and TiB₂-based ceramic composite materials", i.e. materials consisting of more than 80% vol., preferably more than 90% vol., more preferably more than 95% vol., even more preferably more than 98% vol. of B₄C and/or TiB₂, preferably materials essentially consisting of B₄C and/or TiB₂

For the purposes of the present invention, the "hot pressing" technique is also indicated by the initials "HP".

For the purposes of the present invention, the "cold isostatic pressing" technique is also indicated by the initials "CIP".

For the purposes of the present invention, the "hot isostatic pressing" technique is also indicated by the initials "HIP".

For the purposes of the present invention, the "spark plasma sintering" technique is also indicated by the initials "SPS".

For the purposes of the present invention, the "pressureless sintering" technique or "sintering in the absence of mechanical pressure" is also indicated by the initials "PLS".

For the purposes of the present invention, the "gas pressure sintering" technique is also indicated by the initials "GPS".

For the purposes of the present invention, the "high energy milling" technique is also indicated by the initials "HEM".

The present invention relates to a process for producing a ceramic composite material comprising B₄C and TiB₂, wherein TiB₂ is present in an amount between > 0% vol. and ≤ 95% vol., by sintering in the absence of mechanical pressure (PLS). According to one embodiment, therefore, the present invention relates to a process for producing a ceramic composite material comprising B₄C and wherein TiB₂ is not present (i.e. TiB₂ = 0% vol.) or a ceramic composite material comprising TiB₂, and wherein B₄C is not present (i.e. B₄C = 0% vol.).

According to one embodiment, the present invention relates to a process for producing a ceramic composite material comprising B₄C and TiB₂, wherein TiB₂ is present in an amount between 5% vol. and 95% vol., more preferably between 25% vol. and 75% vol., even more preferably equal to about 50% vol.

In other words, the present invention relates to a process for producing a ceramic composite material comprising B₄C/xTiB₂, wherein 0% vol. < x ≤ 95% vol., preferably 5% vol. ≤ x ≤ 95% vol., more preferably 25% vol. ≤ x ≤ 75% vol., even more preferably x is equal to about 50% vol.

According to a particularly preferred embodiment, the present invention relates to a process for producing a ceramic composite material comprising B₄C and TiB₂, wherein TiB₂ is present in an amount between > 0% vol. and ≤ 24%, preferably in an amount between 5% vol. and 24% vol., more preferably between 10% vol. and 20% vol., even more preferably equal to about 12.5% vol.

In other words, according to a particularly preferred embodiment, the present invention relates to a process for producing a ceramic composite material comprising B₄C/xTiB₂, wherein 0% vol. < x ≤ 24% vol., preferably 5% vol. ≤ x ≤ 24% vol., more preferably 10% vol. ≤ x ≤ 20% vol., even more preferably x is equal to about 12.5% vol.

The process according to the present invention comprises the steps of:
(i) subjecting a powder comprising B₄C or TiB₂, or a powder comprising B₄C and from > 0% vol. to ≤ 95% vol. or > 0% vol. to ≤ 24% vol. of TiB₂, to high energy milling (HEM) in a solvent selected from: an organic solvent, water, or a combination thereof, within a tungsten carbide (WC) jar or a WC-coated jar and in the presence of grinding media of cemented WC, until a milled powder comprising particles with an average diameter < 1µm is obtained;
(ii) drying the ground powder obtained in step (i), compacting it and subjecting it to cold isostatic pressing (CIP), applying a pressure between 300 and 600 MPa to obtain a semi-finished product having a relative density between 60 and 65%;
(iii) subjecting said semi-finished product to a single sintering cycle in the absence of mechanical pressure by heating it in a vacuum at 20-80 Pa to a temperature between 1600 and 1800 °C, at a heating rate between 10 and 1000 °C/min, preferably between 10 and 100 °C/min

According to one embodiment, the process according to the present invention consists essentially of the aforesaid steps (i)-(iii); it preferably consists of the aforesaid steps (i)-(iii).

According to one embodiment of the invention, step (i) comprises subjecting a powder comprising B₄C or a powder comprising TiB₂ to said high energy milling as described above.

Preferably, said powder comprising B₄C is a powder of B₄C. Similarly, said powder comprising TiB₂ is preferably a powder of TiB₂. Said powder of B₄C or said powder of TiB₂ is preferably a commercial powder. More preferably, the process according to the present invention comprises the use of said commercial powder of B₄C or said commercial powder of TiB₂ directly without there being any need to perform pretreatments before the high energy milling step (i).

According to another embodiment of the invention, step (i) comprises subjecting a powder mixture to said high energy milling as described above, said powder mixture comprising a powder of B₄C and a powder of TiB₂, the latter being present in an amount between > 0% vol. and ≤ 95% vol., preferably in an amount between 5% vol. and 95% vol., more preferably between 25% vol. and 75% vol., even more preferably equal to 50% vol.

According to a particularly preferred embodiment, said powder mixture comprises a powder of B₄C and a powder of TiB₂, the latter being present in an amount between > 0% vol. and ≤ 24% vol., preferably in an amount between 5% vol. and 24% vol., more preferably between 10% vol. and 20% vol., even more preferably equal to 12.5% vol. According to one embodiment of the present invention, step (i) comprises adding to said powder of B₄C, or of TiB₂, or said powder mixture comprising a powder of B₄C and a powder of TiB₂ as described above, a powder comprising WC, preferably a powder of WC, more preferably in an amount between > 0% vol. and ≤ 5% vol., even more preferably in an amount between > 0% vol. and ≤ 2%vol.

According to one embodiment according to the present invention, step (iii) comprises subjecting said semi-finished product to a single sintering cycle in the absence of mechanical pressure by heating it in a vacuum at 20-80 Pa to a temperature between 1600 and 1800 °C at a heating rate of 10-1000 °C/min and continuing to heat said semi-finished product to a maximum temperature (T) of 1900 °C ≤ T ≤ 2100 °C, preferably 1900 °C ≤ T < 2100 °C, more preferably 1900 °C ≤ T ≤ 2050 °C, at a heating rate of 10-1000°C/min, while applying an inert gas pressure, preferably equal to 0.1 MPa;
and, once this maximum temperature of 1900 °C ≤ T ≤ 2100 °C, preferably 1900 °C ≤ T < 2100 °C, more preferably 1900 °C ≤ T ≤ 2050 °C has been reached,
(iv.1) maintaining said temperature and pressure conditions for a period of time of 0.1 to 120 minutes;
(iv.2) or increasing the inert gas pressure to 1-10 MPa and maintaining these temperature and pressure conditions for a period of time of 0.1 to 60 minutes,
said steps (iv.1) or (iv.2) also being performed in the absence of mechanical pressure and, according to a preferred embodiment, without intermediate stops between said steps (iv.1) or (iv.2) and step (iii).

According to the present invention, steps (iv.1) and (iv.2) are sintering steps in the absence of mechanical pressure and with gas pressure (PLS-GPS).

According to one embodiment, the process according to the present invention essentially consists of the aforesaid steps (i)-(iii) and (iv.1) or the aforesaid steps (i)-(iii) and (iv.2).

According to one embodiment, the process according to the present invention consists of the aforesaid steps (i)-(iii) and (iv.1) or the aforesaid steps (i)-(iii) and (iv.2).

Said inert gas is preferably Ar.

According to a preferred embodiment, the solvent used for milling in step (i) as described above is an organic solvent, preferably selected in the group consisting of: ethyl alcohol, isopropyl alcohol and anhydrous cyclohexane.

According to a particularly preferred embodiment, the solvent used for said milling in step (i) is distilled water.

Preferably, the high energy milling step (i) is performed by means of a planetary mill or attritor mill or vibration milling.

Preferably, the milling in step (i) is carried out for a time between 0.1 and 120 minutes, more preferably for a time between 5 and 30 minutes.

More preferably, said milling is carried out at a speed of between 10 and 1000 rpm, even more preferably between 400 and 600 rpm.

The tungsten carbide jar or tungsten carbide-coated jar used in the process according to the present invention is preferably filled to a maximum of 50 to 90%, more preferably to about 75% of its total volume.

According to a preferred embodiment, in step (i) of the process according to the present invention, the ratio between powder, grinding media and solvent is between 1:1:1 and 1:10:1, preferably equal to 1:6:1.

As described above, said grinding media are grinding media made of cemented WC. Said cemented WC grinding media are preferably commercial WC grinding media made and comprise from 0% wt. to 10% wt. of Co, preferably > 0% wt. to 10% wt. of Co, more preferably 1% wt. to 6% wt. of Co, even more preferably 3% wt. to 6% wt. of Co.

More preferably, the aforesaid grinding media are grinding balls. Even more preferably, said grinding balls have a diameter between 0.1 and 100 mm.

Without wishing to be bound to a specific theory, the Applicant has found that, thanks to said high energy milling inside a tungsten carbide (WC) jar or WC-coated jar and in the presence of the aforesaid cemented WC grinding media, it is possible not only to advantageously reduce the size of the starting powders, thereby increasing reactivity during densification, but also to deliberately contaminate the system with WC originating from the erosion of the grinding media, which can help to densify the material during the subsequent sintering.

After milling, the powder of B₄C and/or TiB₂ as previously described has a smaller particle size than the starting one and is doped with an amount of WC deriving from the grinding media of between 1 and 5% vol., preferably around 2% vol. According to one embodiment described above, the doping can also be obtained by directly mixing a powder comprising WC, preferably a powder of WC, with the powder of B₄C and/or TiB₂. Such an embodiment is preferably used as an alternative to the use of WC grinding media.

The content of powder comprising WC optionally added in step (i) of the process according to the present invention is preferably in an amount ≤ 5% vol., preferably in an amount between > 0% vol. and ≤ 5% vol., even more preferably in an amount between > 0% vol. and ≤ 2%vol.

Without wishing to be bound to a specific theory, the Applicant has observed that, if cemented WC grinding media also comprising a certain % of Co according to one of the embodiments described above are used, the system will also be contaminated with a certain amount of Co, preferably between > 0% vol. and ≤ 0.6% vol.

Unlike other sintering additives, WC does not form secondary phases on the grain which render the material fragile, but rather, by reacting with the surface oxides of B₄C (for example B₂O₃), it forms a series of phases of WxBy and CO released in the form of a gas. The elimination of the surface oxides of boron helps the sintering process, whereas in the case of TiB₂ or B₄C/xTiB₂ wherein 0% vol. < x ≤ 95% vol., a solid solution of (Ti, W)B₂ also forms, thus favouring, in both cases, the densification of the final ceramic material without negatively impacting the mechanical properties of the material itself.

Moreover, in the case of the preferred embodiments of the present invention, wherein the grinding media are cemented WC grinding media, also with a certain % of Co according to one of the embodiments described above, and in the embodiments in which an inert gas pressure is applied (PLS-GPS), preferably under the conditions of step (iv.2), the Applicant has found that not only is the complete densification of the material advantageously reached, but the inert gas pressure also hinders the evaporation of small percentages of useful contaminating elements such as, in this case, Co, which forms a thin film of a liquid phase, thereby further favouring sintering in a short time.

Furthermore, advantageously, the combination of said cold isostatic pressing (CIP) step (ii) with the subsequent step (iii) allows the residual porosity within the material to be eliminated and favours the elimination of the more volatile oxide-based impurities.

According to one embodiment, where the powder subjected to milling in step (i) is a powder mixture comprising a powder of B₄C and a powder of TiB₂ in an amount between > 0% vol. and ≤ 95% vol., or, preferably, between > 0% vol. and ≤ 24% vol. as described above, the process according to the present invention comprises, prior to said step (i), the steps of:
(a) subjecting said powder mixture comprising a powder of B₄C and a powder of TiB₂ in an amount between > 0% vol. and ≤ 95% vol., or, preferably, between > 0% vol. and ≤ 24% vol., to pre-grinding by the ball milling technique in an organic solvent, preferably ethanol, in the presence of ceramic grinding media, preferably ceramic grinding media made of tungsten carbide (WC);
(b) separating said grinding media and drying the ground powder obtained step (a). Said powder of B₄C and said powder of TiB₂ are preferably commercial powders as described above.

More preferably, the process according to the present invention comprises using said commercial powders of B₄C and TiB₂ directly without the need to perform pretreatments prior to step (a) and/or prior to step (i).

The aforesaid ceramic grinding media are preferably grinding balls.

Even more preferably, said grinding balls are selected with a diameter of between 5 and 15 mm.

Step (a) is preferably performed for a time of between 1 minute and 48 hours, more preferably between 12 and 24 hours.

According to one embodiment, in step (a) the ratio between said powder, said grinding media and said organic solvent is between 1:1:1 and 1:4:1, preferably equal to 1:2:1.

According to one embodiment, the drying carried out in step (b) is performed at a temperature between 60 and 100 °C, preferably by means of a rotary evaporator at a speed of between 80 and 120 rpm.

According to one embodiment, prior to step (i), the dried powder obtained in step (b) is sieved at 50-600 µm, preferably at 250 µm.

Preferably, in step (ii) as described above, the ground powder obtained in step (i) is dried at a temperature between 80 and 120 °C, preferably for a period of time between 1 and 24 hours.

According to a preferred embodiment, before being compacted and subjected to cold isostatic pressing as described above, the powder thus dried is sieved at 50-600 µm. According to one embodiment of the invention, in step (ii), the dried and, preferably, sieved powder is compacted uniaxially, more preferably by applying a pressure of between 10 and 100 MPa, until obtaining a pellet, which is subsequently subjected to cold isostatic pressing (CIP) as described above.

Said cold isostatic pressing is preferably performed by inserting said pellet into a plastic vacuum bag.

Without wishing to be bound to a specific theory, the Applicant has found that, thanks to step (ii) of the process of the invention according to any one of the embodiments described above, one eliminates the need to use organic binders (i.e. organic additives), which are usually added in the raw materials, then sintered by means of the pressureless sintering technique. The addition of such additives, in fact, though it enables good values of relative density of said materials to be obtained when they are pressed uniaxially, has the drawback, however, of requiring a preliminary heat treatment (debonding) to eliminate the organic phase before the subsequent sintering conditions are applied.

Therefore, the process according to the present invention preferably does not comprise the addition of organic additives. More preferably, said organic additives are selected from the group consisting of: di-hydroxy-bis(ammonium lactate)titanium(IV), phenolic resin, polyvinyl alcohol (PVA), polyethylene glycol (PEG), polyacrylates, polyalcohols, polyamines, or a combination thereof. Furthermore, preferably, the process of the present invention according to any one of the embodiments described above does not comprise any further pre- and/or post-sintering treatments.

Preferably, according to such an embodiment, the process of the present invention does not comprise further any pre- and/or post-sintering treatments in addition to the steps described above.

More preferably, said pre- and/or post-sintering treatments are selected from the group consisting of: granulation, addition of additives, debonding, or a combination thereof.

The present invention also relates to a ceramic article comprising B₄C, obtainable by means of the process as described above. Said ceramic article is characterised by possessing at least one of the following properties, preferably simultaneously the following properties:
- a relative density higher than or equal to 98%, preferably higher than or equal to 99%, more preferably higher than or equal to 99.5%;
- a fine microstructure between 1 and 3 µm and comprising WxBy phases;
- a hardness higher than or equal to 23 GPa, preferably between 23 and 32 GPa.

Said ceramic article is preferably characterised by possessing a bulk density between ≥ 2.4 and ≤ 3 g/cm³.

According to a preferred embodiment, the aforesaid composite material obtainable with the process according to the present invention is a B₄C-based ceramic composite material, i.e. a material consisting of more than 80% vol., preferably more than 90% vol., more preferably more than 95% vol., even more preferably more than 98% vol. of B₄C. According to a particularly preferred embodiment, it is a material essentially consisting of B₄C.

The present invention also relates to a ceramic article comprising TiB₂, obtainable by means of the process as described above. Said ceramic article is characterised by possessing at least one of the following properties, preferably simultaneously the following properties:
- a relative density higher than or equal to 98%, preferably higher than or equal to 99%, more preferably higher than or equal to 99.5%;
- a fine microstructure between 1 and 3 µm and comprising WxBy phases and solid (Ti, W)B₂ solutions;
- a hardness higher than or equal to 23 GPa, preferably between 23 and 32 GPa.

Said ceramic article is preferably characterised by possessing a bulk density ≥ 4.3 g/cm³ and ≤ 4.8 g/cm³.

According to a preferred embodiment, the aforesaid composite material obtainable with the process according to the present invention is a TiB2-based ceramic composite material, i.e. a material consisting of more than 80%vol., preferably more than 90% vol., more preferably more than 95% vol., even more preferably more than 98% vol. of TiB₂. According to a particularly preferred embodiment, it is a material essentially consisting of TiB₂.

The present invention also relates to a ceramic article comprising B₄C/xTiB₂ with 0%vol. < x ≤ 24% vol., preferably 5% vol. ≤ x ≤ 24% vol., more preferably 10% vol. ≤ x ≤ 20% vol., even more preferably x being equal to about % 12.5%vol, obtainable by means of the process as described above.

Said ceramic article is characterised by possessing at least one of the following properties, preferably simultaneously the following properties:
- a relative density higher than or equal to 98%, preferably higher than or equal to 99%, more preferably higher than or equal to 99.5%;
- a bulk density ≤ 3.2 g/cm³; preferably ≤ 3 g/cm³, more preferably ≤ 2.8 g/cm³;
- a fine microstructure between 1 and 3 µm and comprising WxBy phases and solid (Ti, W)B₂ solutions;
- a hardness higher than or equal to 23 GPa, preferably between 23 and 32 GPa;
- a flexural strength higher than or equal to 700 MPa, more preferably between 800 and 900 MPa;
- a fracture toughness between 4 and 6 MPa m^{0,5}; and
- an elastic modulus higher than or equal to 400 GPa.

According to a preferred embodiment, the aforesaid composite material obtainable with the process according to the present invention is a B₄C/xTiB₂-based ceramic composite material with x as described above, i.e. a material consisting of more than 80%vol., preferably more than 90% vol., more preferably more than 95% vol., even more preferably more than 98% vol. of B₄C/xTiB₂ with x as described above. According to a particularly preferred embodiment, it is a material essentially consisting of B₄C/xTiB₂ with x as described above.

Advantageously, the process of the present invention according to any one of the embodiments described above, makes it possible to obtain a ceramic material with the aforesaid advantageous and desired properties, in particular for applications for ballistic purposes, at temperatures ≤ 2100 °C, preferably <2100 °C and with sintering times < 120 minutes.

Without wishing to be bound to a specific theory, it is possible to maintain, however, that the ceramic article according to any one of the embodiments described above, obtainable by means of the process as described above, where it is obtained according to the embodiment comprising step (iv.2), is characterised by a further refinement of the microstructure and by a more homogeneous microstructure. Without wishing to be bound to a specific theory, the Applicant has in fact found that the possibility of increasing the gas pressure above 1800 °C (i.e. upon the reaching of said maximum temperature of 1900 °C ≤ T ≤ 2100 °C as described in step (iv.2) described above), besides compressing the material isostatically, after eliminating the closed porosity, advantageously enables a decrease in the vapour tension of the contaminants deliberately introduced into the system, i.e. WC and optionally also Co, and originating from the grinding media and/or the addition of a powder comprising WC, which would otherwise vaporise at the aforesaid temperatures.

Furthermore, the process according to the present invention, thanks to the specific steps described above, enables numerous ceramic articles to be sintered simultaneously in a single sintering cycle and with varying complex shapes and geometries while avoiding subsequent costly cutting techniques, which are used in the case of articles with regular geometric shapes.

The present invention also relates to the use of the article according to any one of the embodiments described above for making ballistic protection, cutting tools or blasting nozzles and for nuclear applications.

### EXAMPLES

### Example 1 - High energy milling of a B₄C/TiB₂ powder mixture

100 g of a powder mixture comprising a powder of B₄C and a powder d TiB₂ (75% vol. B₄C and 25% vol. TiB₂) were prepared from commercial powders: B₄C (H.C. Starck Grade HS-A, D90 2.0-4.0 µm, D50 0.6-1.2 µm, B:C ratio 3.7, impurities (wt. %): 0.7 N, 1.7 O, 0.05 Fe, 0.15 Si, 0.05 Al); TiB₂ (H.C. Starck, Grade F, D90 4.0 -7.0 µm, D50 2.5-3.5 µm, impurities (wt. %): 0.4 C, 2.5 O, 0.5 N, 0.1 Fe). A 100 g powder mixture comprising a powder of B₄C and a powder of TiB₂ (87.5% vol. B₄C and 12.5% vol. TiB₂) was prepared with the same commercial powders.

Both mixtures of B₄C/TiB₂ powders were prepared with the conventional milling technique (ball milling) in absolute ethanol for 24 hours in a jar (with ceramic grinding media) to obtain a homogeneous dispersion of the starting powders.

At the end of milling, both B₄C/TiB₂ mixtures were dried by means of a rotary evaporator at 70 °C and 120 rpm and then sieved at 250 µm.

After sieving, the same powder mixtures were subjected to high energy milling (H.E.M. technique) in the presence of ethyl alcohol or water, by means of a planetary mill in a jar made of WC and grinding balls made of cemented tungsten carbide with 6% wt. Co (WC-6 %vol. Co) and with a diameter of 0.6 mm for 30 minutes at 400-600 rpm. The ratio between the amount of powder, grinding balls and ethanol was 1:6:1. The mixtures were dried overnight in an oven at 80-100 °C, sieved at 250 µm and compacted uniaxially in a steel mould, applying a pressure of 25 MPa. The pellets thus obtained were inserted into a plastic vacuum bag and subsequently pressed with a cold isostatic press (CIP), applying 400 MPa until obtaining intermediates, also called "green body". At the end of milling, the average size of the B₄C and TiB₂ powders have decreased to between about 1.5 and 2 microns and the amount of WC incorporated due to the wear of the grinding media is between 0.8 - 1.6% vol.

### Example 1.1 - High energy milling of a B₄C powder

100 g of commercial B₄C powder (H.C. Starck Grade HS-A, D90 2.0-4.0 µm, D50 0.6-1.2 µm, B:C ratio 3.7, impurities (wt. %): 0.7 N, 1.7 O, 0.05 Fe, 0.15 Si, 0.05 Al) were directly subjected to high energy milling according to the working conditions described for example 1.

### Example 1.2 - High energy milling of a TiB₂ powder

100 g of commercial TiB₂ powder (H.C. Starck, Grade F, D90 4.0 -7.0 µm, D50 2.5-3.5 µm, impurities (wt. %): 0.4 C, 2.5 O, 0.5 N, 0.1 Fe) were directly subjected to high energy milling according to the working conditions described for the example 1.

### Example 2 - Sintering in the absence of mechanical pressure and with inert gas pressure (PLS-GPS)

The intermediates of Examples 1, 1.1 and 1.2 were sintered in a sintering furnace without mechanical pressure, heated under a vacuum at about 20-80 Pa to 1600-1800 °C at a heating rate of 10 °C/min. Heating was then continued up to a temperature of 2050-2100 °C with 0.1 MPa of gas pressure (argon), while maintaining a heating rate of 5-10 °C/min. Once the maximum temperature of 2050-2100°C was reached, the gas pressure was increased to 5 MPa and these pressure and temperature conditions were maintained for 60 minutes. Figures 1-4 show SEM (scanning electron microscope) images of the microstructure of the ceramic composite materials obtained after sintering of the aforesaid intermediates of Examples 1, 1.1 and 1.2.

### Example 3 - comparison

Comparative samples, both B₄C-based and B₄C/TiB₂-based, were sintered under the same PLS-GPS conditions as in example 2 with the difference that the initial powders were not subjected to high energy milling, as in the case of the present invention, but rather to traditional milling (ball milling).

The relative density and Vikers hardness HV1.0 (European standard ENV 843-4, indentation with a force of 9.81N applied for 10 seconds) were measured for the comparative specimens, as well as the specimens obtained with the process according to the present invention.

The following table (Table 1) shows the results compared.

**Table 1**

| Specimen (composition of starting powders) | Milling solvent | H.E.M | Relative density % | Vikers hardness HV1.0 |
|---|---|---|---|---|
| 75% vol. B₄C + 25 % vol. TiB₂ | EtOH | Yes | 99% | 28.2 ± 0.6 |
| 75% vol. B₄C + 25 % vol. TiB₂ | EtOH | No | 80% | Not measurable |
| 100% B₄C | EtOH | Yes | 99% | 27 ± 1.46 |
| 100% B₄C | EtOH | No | 85% | Not measurable |
| 87.5% vol. B₄C + 12.5% vol. TiB₂ | EtOH | Yes | 98% | 27.4 ± 0.9 |
| 100% TiB₂ | EtOH | Yes | 99% | 29.6 ± 0.8 |

From the results shown in the table, it appears clear that the process according to the present invention allows an effective sintering to be obtained even without the aid of mechanical pressure and at temperatures ≤ 2100 °C and simultaneously enables dense materials to be obtained. In fact, it appears clear that, in the absence of high energy milling (HEM), the materials do not reach the desired level of densification for the purposes of the present invention, i.e. ≥ 98%. In the case of sintering techniques that use mechanical pressure (e.g. HP or SPS), by contrast, as reported by S. Failla et al., "Hard and easy sinterable B4C-TiB2-based composites doped with WC", J. Eur. Ceram. Soc. 38 (2018) 3089-3095", it is possible to densify materials independently of the process of high energy milling of the initial powder mixture. However, in this case, the sintering techniques are not of industrial interest, since, as already mentioned, they are discontinuous techniques that pose disadvantages when applied on an industrial scale.

## Claims

1. A process for producing a ceramic composite material comprising B₄C, TiB₂, or B₄C/xTiB₂, wherein 0% vol. < x ≤ 95% vol., preferably 0% vol. < x ≤ 24% vol., by sintering in the absence of mechanical pressure, said process comprising the steps of:
(i) subjecting a powder comprising B₄C or a powder comprising TiB₂, or a powder comprising B₄C and from > 0% vol. to ≤ 95% vol., preferably to ≤ 24% vol. of TiB₂, to a high energy milling (HEM) in a solvent selected from: an organic solvent, water, or a combination thereof, within a tungsten carbide (WC) jar or a WC-coated jar and in the presence of grinding media of cemented WC, until a milled powder comprising particles with an average diameter < 1µm is obtained;
(ii) drying the ground powder obtained in step (i), compacting it and subjecting it to cold isostatic pressing (CIP) under a pressure between 300 and 600 MPa to obtain a semi-finished product with a relative density between 60 and 65%;
(iii) subjecting said semi-finished product to a single sintering cycle in the absence of mechanical pressure by heating it in a vacuum at 20-80 Pa to a temperature between 1600 and 1800 °C, at a heating rate between 10 °C/min and 1000 °C/min.

2. Process according to claim **1**, wherein said step (iii) comprises subjecting said semi-finished product to a single sintering cycle in the absence of mechanical pressure by heating it in a vacuum at 20-80 Pa to a temperature between 1600 and 1800 °C at a heating rate between 10 °C/min and 1000 °C/min, and then continuing to heat said semi-finished product to a maximum temperature (T) of 1900 °C ≤ T ≤ 2100 °C at a heating rate of 10-1000 °C/min, applying an inert gas pressure, preferably equal to 0.1 MPa;
and once this maximum temperature of 1900 °C ≤ T ≤ 2100 °C has been reached, (iv.1) maintaining these temperature and pressure conditions for a period of time between 0.1 and 120 minutes;
(iv.2) or increasing the inert gas pressure to 1-10 MPa and maintaining these temperature and pressure conditions for a period of time between 0.1 and 60 minutes;
said steps (iv.1) or (iv.2) also being performed in the absence of mechanical pressure and without intermediate stops between said steps (iv.1) or (iv.2) and step (iii).

3. Process according to claim **1** or **2**, wherein said high energy milling of step (i) is carried out for a time between 0.1 and 120 minutes and, preferably, at a speed between 10 and 1000 rpm.

4. Process according to any one of the preceding claims, wherein said tungsten carbide (WC) or WC-coated jar is filled to a maximum between 50 and 90% of its total volume.

5. Process according to any one of the preceding claims, wherein in step (i) the ratio of powder, grinding media and solvent is between 1:1:1: and 1:10:1.

6. Process according to any one of the preceding claims further comprising, when said powder is a powder mixture comprising a powder of B₄C and a powder of TiB₂ in an amount between > 0% vol. and ≤ 95% vol., preferably between > 0% vol. and ≤ 24% vol., prior to step (i), the steps of:
(a) subjecting said powder mixture to pre-grinding by the ball milling technique in an organic solvent, preferably ethanol, in the presence of grinding media of tungsten carbide (WC);
(b) separating these grinding media and drying the ground powder obtained in step (a).

7. Process according to any one of the preceding claims not comprising the addition of organic additives, preferably said additives being selected from the group consisting of: di-hydroxy-bis(ammonium lactate)titanium(IV), phenolic resin, polyvinyl alcohol (PVA), polyethylene glycol (PEG), polyacrylates, polyalcohols, polyamines, or a combination thereof.

8. Process according to any one of the preceding claims not comprising further pre- and/or post-sintering treatments, preferably granulation steps, addition of additives, debonding, or a combination thereof.

9. Ceramic article comprising B₄C obtainable according to any one of claims **1-5** and **7-8**, **characterised by** possessing simultaneously:
- a relative density higher than or equal to 98%, preferably higher than or equal to 99%, more preferably higher than or equal to 99.5%;
- a fine microstructure between 1 and 3 µm and comprising WxBy phases;
- a hardness higher than or equal to 23 GPa, preferably between 23 and 32 GPa.

10. Ceramic article comprising TiB₂ obtainable according to any one of claims **1-5** and **7-8**, **characterised by** possessing simultaneously:
- a relative density higher than or equal to 98%, preferably higher than or equal to 99%, more preferably higher than or equal to 99.5%;
- a fine microstructure between 1 and 3 µm and comprising WxBy phases and solid (Ti, W)B₂ solutions;
- a hardness higher than or equal to 23 GPa, preferably between 23 and 32 GPa.

11. Ceramic article comprising B₄C/xTiB₂ with 0%vol. < x ≤ 24% vol., obtainable according to any one of claims **1-8**, **characterised by** possessing simultaneously:
- a relative density higher than or equal to 98%, preferably higher than or equal to 99%, more preferably higher than or equal to 99.5%;
- a bulk density ≤ 3.2 g/cm³; preferably ≤ 3 g/cm³, more preferably ≤ 2.8 g/cm³;
- a fine microstructure between 1 and 3 µm and comprising WxBy phases and solid (Ti, W)B₂ solutions;
- a hardness higher than or equal to 23 GPa, preferably between 23 and 32 GPa;
- a flexural strength higher than or equal to 700 MPa, more preferably between 800 and 900 MPa;
- a fracture toughness between 4 and 6 MPa m^{0,5}; and
- an elastic modulus higher than or equal to 400 GPa.

12. Use of the ceramic article according to any one of claims **9-11** for making ballistic protection, cutting tools, blasting nozzles and for nuclear applications.
